# EUROPÄISCHE PATENTSCHRIFT

(11) **EP 1 270 373 B1**
(45) Veröffentlichungstag und Bekanntmachung des Hinweises auf die Patenterteilung: **03.05.2006**
(21) Anmeldenummer: 02013285.8
(22) Anmeldetag: 18.06.2002
(51) Int. Cl.: B62D 11/18, B62D 1/12

(54) **Fahrzeug mit zwei Lenkhebeln**
Vehicle with two steering control levers
Véhicule avec deux leviers de commande de direction

(30) Priorität: 21.06.2001 US 886684
(43) Veröffentlichungstag der Anmeldung: 02.01.2003
(73) Patentinhaber: DEERE & COMPANY, Moline, Illinois 61265-8098 (US)
(72) Erfinder: Law, Charles Thomas, Lenoir City, TN 37772 (US); Clevenger, William Andrew, Knoxville, TN 37922 (US)
(74) Vertreter: Magin, Ludwig Bernhard

(56) Entgegenhaltungen:
- US-A- 3 605 519
- US-A- 3 850 258
- US-A- 4 090 411

## Beschreibung

Die Erfindung betrifft ein Fahrzeug mit zwei Lenkhebeln, welche über Lenkgestänge mit jeweils einer rechten und einer linken Pumpe, über die jeweiligen Antriebsmittel des Fahrzeugs angetrieben werden können, verbunden sind, und mit einem Einstellmechanismus, durch den ein auf beide Lenkhebel in Richtung ihrer Neutralstellung ausgeübter Widerstand einstellbar ist. Ein solches Fahrzeug ist zum Beispiel aus der US-A-4 090 411 bekannt.

Fahrzeuge, wie beispielsweise Kleinlader (skid steer loaders) oder andere hydrostatisch angetriebene Fahrzeuge beispielsweise zur Rasen-, Garten- und Grundstückspflege sind häufig mit einem Paar von Steuer- oder Lenkhebeln ausgestattet, welche in der Nähe eines Bedienersitzes angeordnet sind und die durch eine Bedienungsperson betätigt werden können, um die Bewegungsrichtung des Fahrzeugs zu bestimmen. Um in Vorwärtsrichtung zu fahren, muss eine Bedienungsperson beide Lenkhebel gleichzeitig nach vorne drücken bzw. für eine Fahrt in Rückwärtsrichtung in umgekehrter Richtung betätigen. Wenn eine Bedienungsperson während einer Fahrt in Vorwärts- oder Rückwärtsrichtung einen der Hebel unbeabsichtigt loslässt, kann er schnell in seine neutrale oder aufrechte Stellung zurückkehren, ohne der Bedienungsperson eine Möglichkeit zu geben, die Kontrolle zurückzuerlangen. Entsprechend wird das Fahrzeug aufhören, sich in der gewünschten Richtung zu bewegen und oftmals plötzlich zur rechten oder linken Seite rucken, je nachdem, welchen der Hebel die Bedienungsperson freigegeben hat.

Die Lenkhebel sind meist mit einem Paar drehbarer Hülsen verbunden, welche auf einer Lenkachse drehbar angebracht sind. Mit den Hülsen sind wiederum jeweilige Lenkgestänge verbunden, welche die Hülsen mit jeweils einer linken und einer rechten Pumpe bzw. einem Hydraulikantrieb zur Steuerung der Fahrzeugbewegung verbinden. Die Pumpen werden durch eine Bewegung der Lenkhebel betätigt, um Hydraulikflüssigkeit an Hydraulikmotoren zu liefern, welche durch die Pumpen angetrieben werden. Jeder der Motoren kann ein Rad oder eine Mehrzahl von Rädern bzw. ein oder mehrere Antriebsmittel beispielsweise auch eines Raupen- oder Gleiskettenantriebs antreiben. Entsprechend kann die Bedienungsperson durch eine Bewegung eines oder beider Lenkhebel bewirken, dass sich das Fahrzeug in einer gewünschten Richtung fortbewegt, wenn durch die Bedienungsperson eine gewisse Kraft oder Anstrengung auf die Lenkhebel aufgebracht wird, um sie aus ihrer Neutralstellung zu bewegen. Während des Bewegens der Lenkhebel aus ihrer Neutralstellung wird die Bedienungsperson einen gewissen Widerstand erfahren.

Dieser Widerstand ist ein Maß für die an die Lenkhebel angelegte Kraft, die deren Bewegung entgegenwirkt. Er bestimmt auch die Geschwindigkeit mit der jeder Lenkhebel in seine Neutralstellung zurückkehrt, nachdem er aus dieser bewegt wurde. Der Widerstand wird üblicherweise durch einzelne Mechanismen gesteuert, welche an der linken beziehungsweise der rechten Pumpe angebracht sind und mit diesen zusammenwirken. Solche Mechanismen weisen eine Befestigungsplatte auf, welche entsprechend mit der linken bzw. der rechten Pumpe verbunden ist. Diese Befestigungsplatte weist wiederum einen oberen und einen unteren Bereich auf, wobei der untere an der Pumpe angebracht ist. An einer Innenseite des oberen Bereichs ist eine Gleitplatte vorgesehen, deren Funktion noch beschrieben werden wird. Die Gleitplatte mit dem oberen Bereich sind mit dem unteren Bereich verbunden, um sich entlang von Leitschienen oder Stiften zu bewegen, welche sich zwischen den beiden Bereichen erstrecken, um es dem Gleitplatten-Zusammenbau zu erlauben, darauf entlangzugleiten. Durch eine erste Seite der Befestigungsplatte erstreckt sich eine Schraube, um die eine Feder gewickelt ist, um Widerstand auf die Lenkhebel zur Verfügung zu stellen. Um eine gewünschte Menge an Vorspannung und somit Widerstand an jeden der Hebel anzulegen, sind an der Gleitplatte an einer Seite Verschraubungen vorgesehen, die es einer Bedienungsperson erlauben, die Menge an Widerstand einzustellen, die zwischen der Gleitplatte und dem oberen Bereich des Zusammenbaus und dem rückwärtigen Bereich der Befestigungsplatte vorliegt, wenn jeder Lenkhebel sich in seiner Neutralstellung befindet. Eine Einstellung des Abstands wird durch die Bedienungsperson durch ein Sichern der Gleitplatte mit Bezug zu der ersten Seite der Befestigungsplatte durch die Verschraubungen vorgenommen, um so die oben beschriebene Vorspannung einzustellen.

Um die Pumpen zu bewegen und es dadurch Hydraulikflüssigkeit zu erlauben, zu jedem Motor zu fließen, kann jedes Lenkgestänge mit einem sich von der linken oder der rechten Pumpe erstreckenden Arm verbunden werden, der verwendet wird, um zu erlauben, dass die Pumpen bei einer Bewegung der Lenkhebel bewegt werden. Jeder Arm weist an einem Endbereich einen Rollenzusammenbau auf, der dort angeordnet ist, um anfangs die Gleitplatte durch die angelegte Vorspannung, wenn sich ein bestimmter Lenkhebel in der Neutralstellung befindet, zu berühren und welche weiter gegen die Gleitplatte drückt, wenn der Arm durch eine Bewegung des Lenkhebels nach vorn oder rückwärts bewegt wird. Ein weiteres Zusammendrücken der Feder tritt auf, wenn der Rollenzusammenbau die Gleitplatte berührt. Dieses Zusammendrücken der Feder erhöht so den Widerstand auf den/die betroffenen Lenkhebel. Als Ergebnis der Anlage des zusätzlichen Drucks entweder in Vorwärts- oder Rückwärtsrichtung gegen die Gleitplatte betätigt eine Bewegung des Arms die Pumpe und bewirkt, dass Hydraulikflüssigkeit zu dem entsprechenden linken oder rechten Motor fließt, um es den Rädern bzw. dem Antriebsmittel zu erlauben, das Fahrzeug in die gewünschte Richtung zu bewegen.

Die JP-A-05229451 zeigt derartige federbelastete Einrichtungen, durch die jeweils ein Lenkhebel in Richtung seiner Neutralstellung belastet wird.

Die US-A-3,850,258 zeigt ein Fahrzeug, dass durch ein rechtes und ein linkes hydrostatisches Getriebe angetrieben wird und für jedes Getriebe einen separaten Steuerhebel aufweist.

Die US-A-3,605,519 offenbart einen Mechanismus zur gemeinsamen oder unabhängigen Steuerung von zwei separaten Leistungsausgängen.

Die US-A-4,090,411 zeigt ein Fahrzeug, das durch ein rechtes und ein linkes hydrostatisches Getriebe angetrieben wird, wobei für jedes Getriebe ein separater Lenkhebel zur Verfügung steht. Das Fahrzeug weist eine Zentriereinrichtung auf, die die Lenkhebel in Richtung einer Neutralstellung belastet.

Derartige Einstellmechanismen sind aus unterschiedlichen Gründen nachteilig.

Es ist beispielsweise schwierig, an beiden Lenkhebeln den gleichen Widerstand zu erzielen, da zwei getrennte Mechanismen eingesetzt werden, um den Widerstand an dem linken und dem rechten Lenkhebel zu erzielen. Ein derartiges Problem taucht auf, da jeder Mechanismus seine eigene Feder verwendet, welche abweichende Federraten aufweisen können und somit eine unterschiedliche Kraft benötigt wird, um sie zusammenzudrücken bzw. zu spannen. Daher bleibt es einer Bedienungsperson überlassen, zu beurteilen, mit welcher Kraft einer oder beide Lenkhebel betätigt werden sollten.

Da zwei Mechanismen verwendet werden, um den Widerstand auf die Lenkhebel individuell zur Verfügung zu stellen, kann eine Bedienungsperson bei der Betätigung eines Lenkhebels einen höheren Grad an Widerstand als bei der Betätigung des anderen Lenkhebels erfahren. Durch den unterschiedlichen Widerstand an jedem Lenkhebel kehrt ein Lenkhebel häufig schneller in seine Neutralstellung zurück, als dies zu erwarten wäre, wenn beide Lenkhebel den gleichen Grad an Widerstand aufweisen würden. In diesem Fall ist es oftmals für einen Lenkhebel, der aus einer Vorwärts- oder Rückwärtsstellung freigegeben wurde, schwierig, allmählich wieder in seine Neutralstellung zurückzukehren, um es so einer Bedienungsperson zu erlauben, die Kontrolle zu behalten. Folglich kommt es oftmals dazu, dass das Fahrzeug aus seiner Fahrtrichtung ruckt, wenn einer der Lenkhebel unerwartet freigegeben wird.

Weiter ist es schwierig, den Widerstand beider Lenkhebel gleichzeitig einzustellen und dabei nicht den Geradeauslauf des Fahrzeugs zu beeinflussen. Diese Geradeausfahrt wird durch ein Einstellen des größten Abstands, den der Lenkhebel aus seiner Neutralstellung nach vorn und rückwärts erreichen kann, eingestellt. Eine Einstellung des Widerstands wird über ein Lockern bzw. Anziehen der zuvor angeführten Verschraubung erzielt, um den Abstand der zwischen den Gleitplatten und dem unteren Bereich der Befestigungsplatten existiert, zu verändern. Ein Erzielen des gleichen Widerstandes an jedem der Lenkhebel wird weiter erschwert, da eine Bewegung der Gleitplatten mit Bezug zu den Befestigungsplatten die Stellung der Pumpenarme beeinflusst. Dies tritt auf, da der jeweilige Pumpenarm und sein Rollenzusammenbau zwischen jeder Gleitplatte und Befestigungsplatte angeordnet ist und daher selbst bewegt wird, wenn eine Einstellung des Widerstandes an einem der Lenkhebel vorgenommen wird. Diese Schwierigkeit tritt auf, da die Einstellmechanismen mit den Lenkgestängen, welche die Lenkhebel mit dem entsprechenden Pumpenarmen verbinden, verbunden sind.

Die angesprochenen Einstellmechanismen führen häufig zu einem Kriechen des Fahrzeugs, d.h. einem Vorwärtsbewegen des Fahrzeugs, wenn die Lenkhebel nicht betätigt werden. Dies kann auftreten, wenn die Lenkhebel durch den Widerstand nicht in ihre Neutralstellung gebracht werden, wenn sie durch eine Bedienungsperson freigegeben werden. Als Ergebnis wird sich das Fahrzeug ungleichmäßig oder auch abgehackt bewegen.

Darüber hinaus ist zu beachten, dass die Verwendung von zwei Einstellmechanismen kostenintensiv sowohl in der Herstellung als auch in der Wartung ist.

Die der Erfindung zugrundeliegende Aufgabe wird darin gesehen einen Einstellmechanismus zur Verfügung zu stellen, der für beide Lenkhebel eine zumindest annähernd gleiche Belastung in Richtung ihrer Neutralstellung zur Verfügung stellt und somit die zuvor beschriebenen Nachteile überwindet.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Fahrzeug mit einem Einstellmechanismus zur Verfügung gestellt, welcher es einer Bedienungsperson erlaubt, den Widerstand des linken und rechten Lenkhebels in einfacher Weise zur gleichen Zeit einzustellen. Darüber hinaus erlaubt es der Einstellmechanismus den Lenkhebeln, allmählich eine gemeinsame Neutralstellung einzunehmen, die es einer Bedienungsperson ermöglicht, ein Fahrzeug wirksam zu lenken. Auch weist dieser Einstellmechanismus eine geringer Anzahl von Bauteilen auf als bekannte Konstruktionen, die zuvor eingesetzt wurden, um den Widerstand an beiden Lenkhebeln einzustellen, wodurch die Herstell-, Montage- sowie Instandhaltungskosten reduziert werden.

Jeder Lenkhebel kann mit einer drehbar angebrachten Lenkhülse verbunden sein, welche auf einer Lenkachse angeordnet ist, die sich zwischen den Lenkhebeln erstreckt. Mit diesen Lenkhülsen können Lenkgestänge verbunden sein, deren gegenüberliegender Endbereich mit einem Arm einer linken bzw. einer rechten Pumpe eines hydrostatischen Antriebs verbunden ist. Entsprechend drehen sich die Hülsen bei einer Bewegung des jeweiligen Lenkhebels und erlauben es den Armen, sich zu bewegen, und auf diese Weise die Pumpen zu aktivieren und somit einen Flüssigkeitsstrom zu den das Fahrzeug antreibende Hydraulikmotoren freizugeben.

Eine Steuerung des Widerstandes an jedem der Lenkhebel kann dadurch erzielt werden, dass die Hülsen und somit jeder Lenkhebel mit einem Einstellmittel verbunden ist. Bei einem solchen Einstellmittel kann es sich beispielsweise um eine Einstellschraube handeln, welche die Hülse mit einer Befestigungsplatte, die vorzugsweise an den Pumpen angebracht ist, verbunden ist. Eine solche Befestigungsplatte kann einen Boden sowie eine Front- und eine Rückwand aufweisen, wobei die Stellmittel bzw. Stellschrauben durch die Frontwand geführt werden können, aber keine Befestigung an der Befestigungsplatte erfolgt. Die Stellmittel können sich weiter durch die Gleitplatte erstrecken und Kopfbereiche aufweisen, welche an der Gleitplatte in Abhängigkeit von der Stellung der Lenkhebel anliegen können. Jedes der Stellmittel kann darüber hinaus eine Feder aufweisen, die vorzugsweise um das Stellmittel herum gewunden und vor der Frontwand der Befestigungsplatte angeordnet ist. Eine derartige Anordnung erlaubt es der Feder, gegen die Frontwand der Befestigungsplatte zusammengedrückt zu werden, wenn entweder der linke oder der rechte Lenkhebel oder beide Lenkhebel nach rückwärts bewegt werden. Eine Einstellung des auf die Lenkhebel ausgeübten Widerstands wird, kann durch eine einfache Einstellung eines Mittels bzw. einer Mutter o.ä. erzielt werden, welche mit den Stellmitteln zusammenwirken kann bzw. auf die Stellschrauben aufgeschraubt sind, wodurch die Feder zwischen der Mutter und der Frontwand der Befestigungsplatte gehalten wird. Entsprechend kann der Widerstand auf jeden der Lenkhebel eingestellt werden, da eine Bedienungsperson nur an dem Mittel angreifen muss, um es entlang des Stellmittels bzw. der Stellschraube zu bewegen, um eine Menge an Federkompression und somit die gewünschte Menge an Widerstand für jeden Lenkhebel zu erzielen.

Bei einer Bewegung der Lenkhebel nach vorn kann der Widerstand auf jeden Lenkhebel aus einem vorzugsweise zentralen zwischen den linken und dem rechten Stellmittel angeordneten Stellmittel bzw. einer ebensolchen Stellschraube resultieren, welcher/welche zwischen der Frontwand und der Rückwand der Befestigungsplatte angeordnet sein kann. Dieses zentrale Stellmittel kann eine Feder tragen, so dass, wenn der linke und der rechte Lenkhebel nach vorn bewegt werden, die Gleitplatte gegen sie drückt, wenn die Kopfbereiche des linken und des rechten Stellmittels auf der den Lenkhebeln gegenüberliegenden Seite die Gleitplatte in Richtung der Fahrzeugfront ziehen. Auf diese Weise kann die Bedienungsperson die gleiche Menge an Widerstand bei einer Bewegung der Lenkhebel nach vorn erzielen, da nur ein, vorzugsweise zentrales, Stellmittel Verwendung findet. Entsprechend der Einstellung des Widerstands in Rückwärtsrichtung kann eine Mutter bzw. ein Mittel vorgesehen sein, um die Menge an Federkompression zu erzeugen, wenn das Fahrzeug nach vorn bewegt wird. Entsprechend kann eine Bedienungsperson einfach die gleiche Stufe an Federkompression für jeden der beiden Lenkhebel liefern, wodurch der Bedienungsperson eine entsprechende Menge an Widerstand für jeden der Lenkhebel zur Verfügung gestellt wird, um das Fahrzeug wirksamer in Vorwärtsrichtung lenken zu können.

Um die Fähigkeit des Fahrzeugs die Spur zu halten aufrechtzuerhalten und um einem Kriechen entgegenzuwirken, kann der Einstellmechanismus derart ausgebildet sein, dass der Widerstand für jeden der Lenkhebel eingestellt werden kann, ohne eine direkte Verbindung zu den Pumpen aufzuweisen. Das Fehlen einer solchen strukturellen Verbindung zwischen dem Einstellmechanismus und den Pumpen bzw. den Pumpenarmen erlaubt ein Einstellen des Widerstands an jedem der Lenkhebel, ohne den Betrieb der Pumpen zu beeinflussen. Entsprechend kann das Fahrzeug effektiver gelenkt werden, da die Pumpen und zugeordneten Strukturen unabhängig von dem auf jeden Lenkhebel ausgewirkten Widerstand betrieben werden können.

Darüber hinaus kann, da der Widerstand auf beide Lenkhebel, wenn diese nach vorn bewegt werden, getrennt durch ein zentrales Stellmittel und seine zugeordnete Feder gesteuert wird, auch der Weg, den beide Lenkhebel zur Rückkehr in ihre Neutralstellung benötigen, getrennt gesteuert werden. Diese Steuerung trifft besonders zu, wenn einer der Lenkhebel freigegeben wird und der andere in seiner Vorwärtsstellung gehalten wird. In diesem Fall wird die zentrale Feder gegen die Gleitplatte gedrückt verbleiben. Dadurch wird es der Feder auf dem Stellmittel, welches dem freigegebenen Lenkhebel zugeordnet ist, erlaubt, den Lenkhebel allmählich in seine Neutralstellung zurückzubringen, ohne den Betrieb der Pumpen zu beeinflussen, da sie unabhängig von der Verbindung der Pumpen mit den Lenkgestängen gespannt wird.

In der Zeichnung ist ein nachfolgend näher beschriebenes Ausführungsbeispiel der Erfindung dargestellt. Es zeigt:
- Fig. 1: eine perspektivische Darstellung eines Kompaktladers bzw. eines Fahrzeugs,
- Fig. 2: eine perspektivische Darstellung einer Bedienerplattform eines Fahrzeugs entsprechend Fig. 1,
- Fig. 3: eine perspektivische Darstellung von Lenkhebeln und deren Verbindung mit einer Lenkwelle,
- Fig. 4: eine Darstellung der Lenkhebel und ihrer Verbindung mit einem Einstellmechanismus,
- Fig. 5: eine Ansicht der Anordnung aus Fig. 4 von rückwärts betrachtet,
- Fig. 6: eine Darstellung der Verbindung der Lenkhebel mit dem Einstellmechanismus und seine Verbindung mit hydrostatischen Pumpen des Fahrzeugs,
- Fig. 7: eine vergrößerte Ansicht des Einstellmechanismus und seiner Verbindung mit der Lenkwelle von vorn betrachtet,
- Fig. 8: eine schematische Darstellung, welche die Wirkungsweise des Einstellmechanismus zeigt, wenn sich das Lenksystem in seiner Neutralstellung befindet,
- Fig. 9: eine Darstellung entsprechend Fig. 8, wenn sich das Lenksystem in seiner Stellung für Vorwärtsfahrt befindet,
- Fig. 10: eine Darstellung entsprechend Fig. 8, wenn sich das Lenksystem in seiner Stellung für Rückwärtsfahrt befindet und
- Fig. 11: eine Darstellung entsprechend Fig. 8, wenn das Fahrzeug eine Linkskurve ausführt.

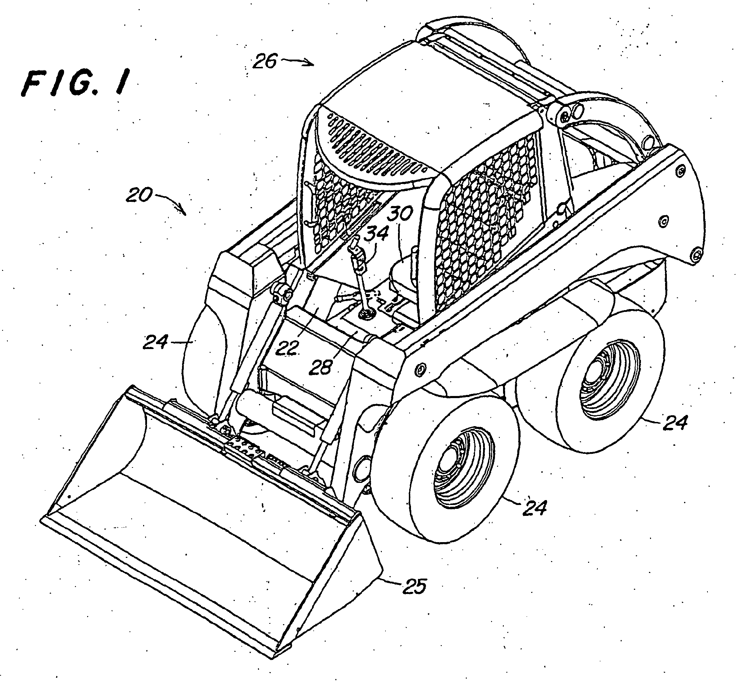

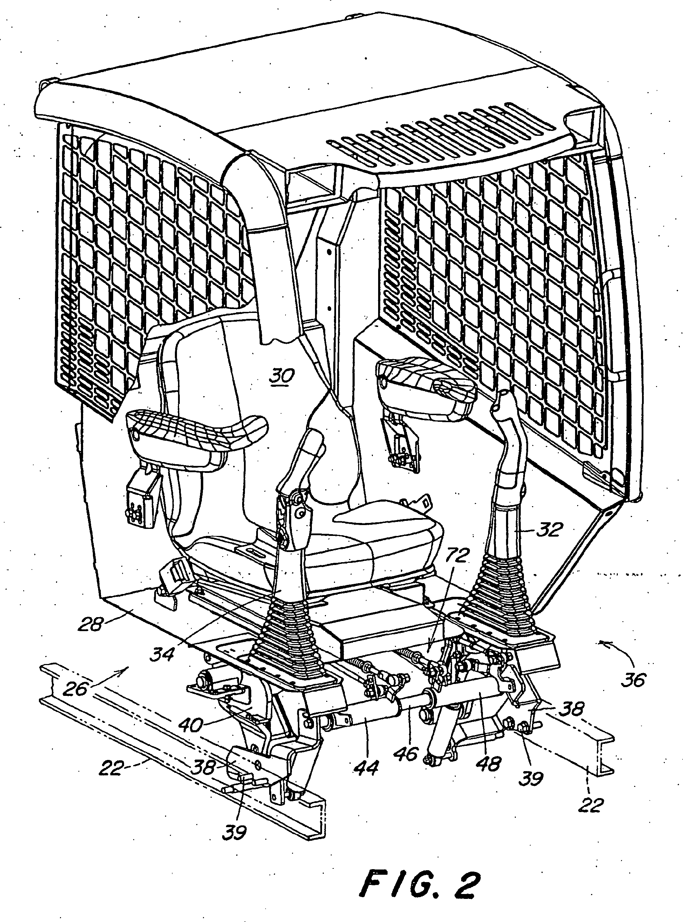

Mit Bezug auf die Figuren 1 und 2 wird ein Baufahrzeug bzw. ein Fahrzeug 20, welches üblicherweise als Kleinlader (skid steer loader) bezeichnet wird, gezeigt, welches einen Rahmen 22, der auf am Untergrund angreifenden Rädern bzw. Antriebsmitteln 24, angeordnet ist, eine Schaufel 25, eine teilweise geschlossene Bedienerplattform 26 mit einem Boden 28 und einem Sitz 30 aufweist. In der Nähe des Sitzes 30 sind Steuereinrichtungen in Form aufrechter linker und rechter Lenkhebel 32, 34 angeordnet.

Figur 2 zeigt die Bedienerplattform 26 aus Figur 1 genauer. Es werden der Sitz 30 und entsprechende linke und rechte Lenkhebel 32 und 34 gezeigt. Unterhalb des Kabinenbodens 28 ist ein Lenksystem 36 angeordnet, welches es einer Bedienungsperson erlaubt, unter einer Mehrzahl von Richtungen diejenige auszuwählen, in welche das Fahrzeug betrieben werden soll. Wie es in Figur 2 gezeigt wird, dient ein Paar von jeweils auf gegenüberliegenden Seiten des Rahmens 22 angeordneten Haltern 38 und Bügeln 40 dazu, es der Bedienerplattform 26 zu erlauben, zusammen mit dem Lenksystem 36 an dem Rahmen 22 montiert zu werden. Um dies zu erreichen, sind Stifte 39 vorgesehen, um die Halter 38 und Bügeln 40 mit dem Rahmen 22 zu verbinden.

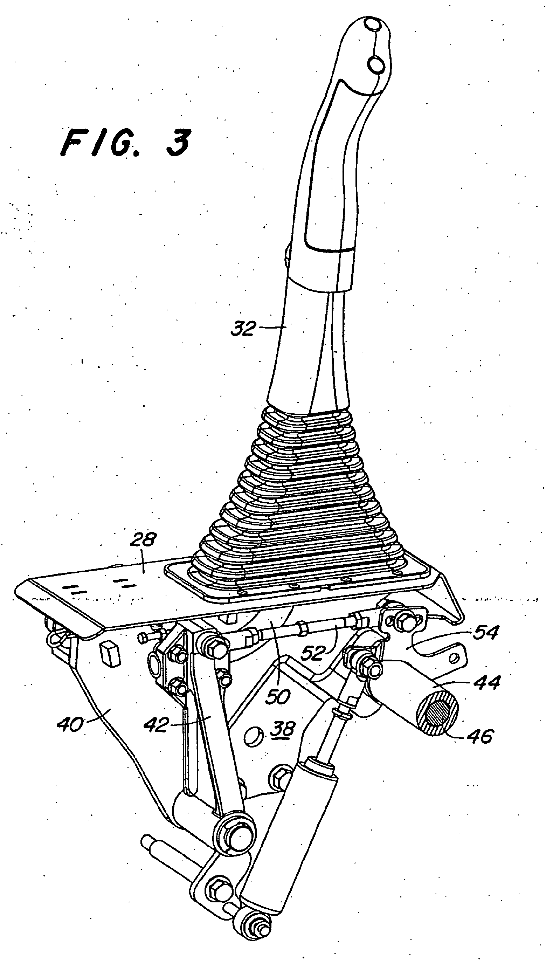

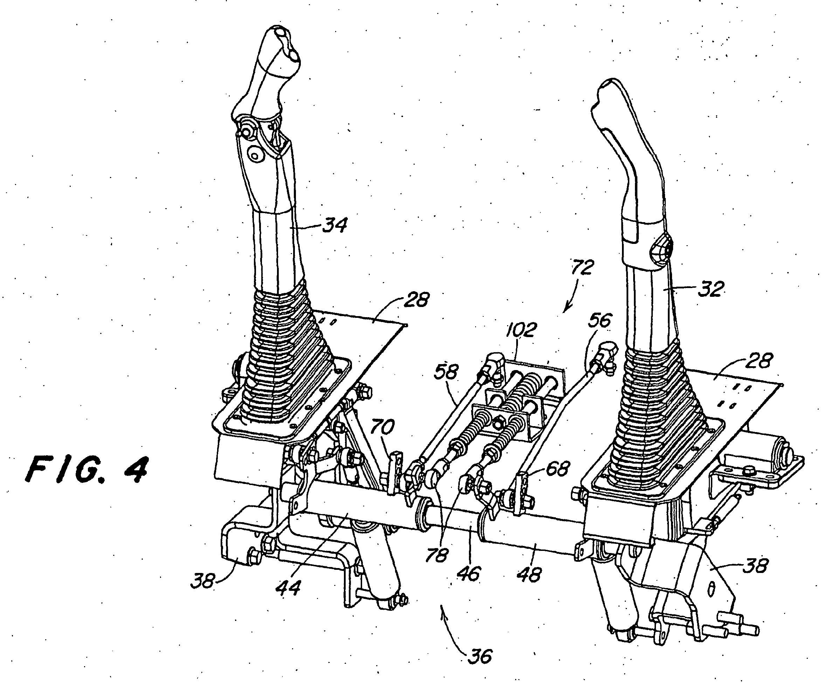

Figur 2 und genauer Figur 3 zeigen die Verbindung des rechten Lenkhebels 34 mit einem Schwenkarm 42. Jeder Schwenkarm 42 kann mit Bezug auf den entsprechenden Bügel 40 schwingen und wird verwendet, um eine Übertragung einer Bewegung des Lenkhebels 34 zu einer ersten Hülse 44 zu unterstützen, welche eine Lenkachse 46 umschließt. Eine gleichartige Konstruktion, welche eine zweite Hülse 48 aufweist, ist auf der linken Seite der Lenkachse 46 vorgesehen, wie dies in Figur 4 gezeigt wird. Eine Verbindung des Lenkhebels 34 mit dem Schwenkarm 42 wird durch ein Rohr 50 erzielt, welches sich davon nach unten erstreckt, wie dies in Figur 3 gesehen werden kann. Eine Übertragung der Bewegung des Schwenkarms 42 zu der Lenkachse 46 wird weiter durch eine Stange 52 unterstützt, die den Schwenkarm 42 mit einem Halter 54 verbindet, welcher an der Hülse 44 angebracht ist. Durch ihre Verbindung, erlaubt es eine Bewegung des Lenkhebels 34 der Hülse 44 entweder in eine Vorwärtsfahrt- oder Rückwärtsfahrtstellung des Fahrzeugs 20 in Abhängigkeit von einer Auswahl einer Bedienungsperson gedreht zu werden.

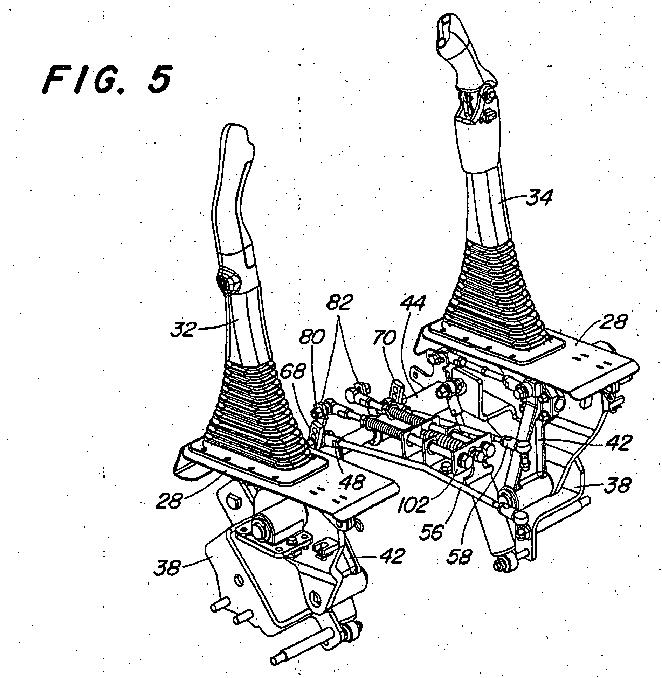

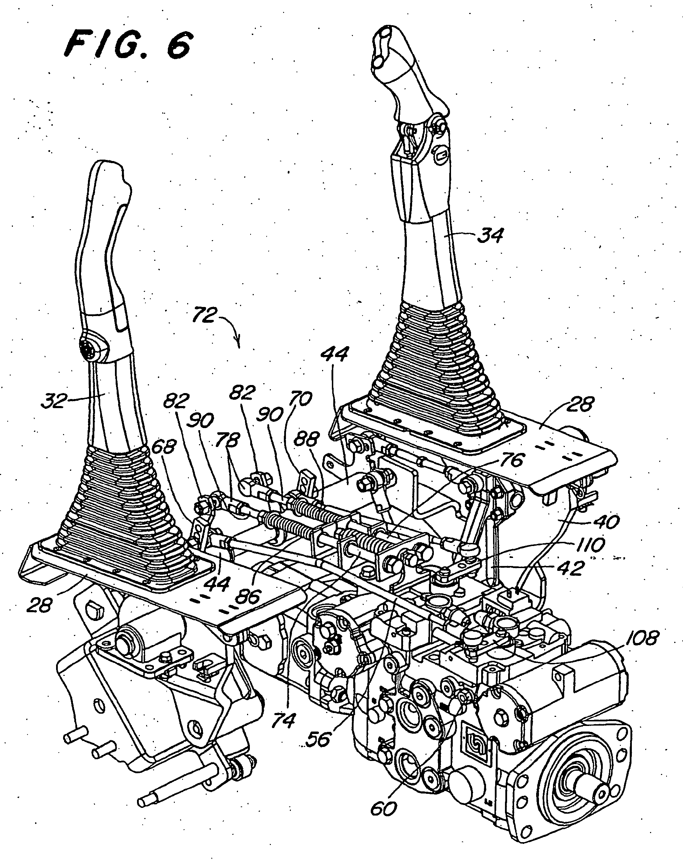

Die Figuren 4 und 5 stellen das Lenksystem 36 mit seinen zugeordneten linken und rechten Lenkgestängen 56, 58 genauer dar, welche sich von ihren entsprechenden Pumpen 60, 62 nach hinten erstrecken, wie dies in Figur 6 gezeigt wird. Jeweils an den linken und rechten Seitenbereichen 64, 66 der Lenkachse 46 ist an den Hülsen 44, 48 ein Winkelhebel oder Hebelarm 68, 70 angebracht, der es den Hülsen 44, 48 erlaubt, mit den Lenkgestängen 56, 58 verbunden zu werden, um eine Drehbewegung der Hülsen 44, 48 in eine lineare Bewegung zu übertragen, wodurch es den Lenkgestängen 56, 58 erlaubt wird, die Pumpen 60, 62 zu bewegen oder zu aktivieren, wie dies in Figur 6 gezeigt wird.

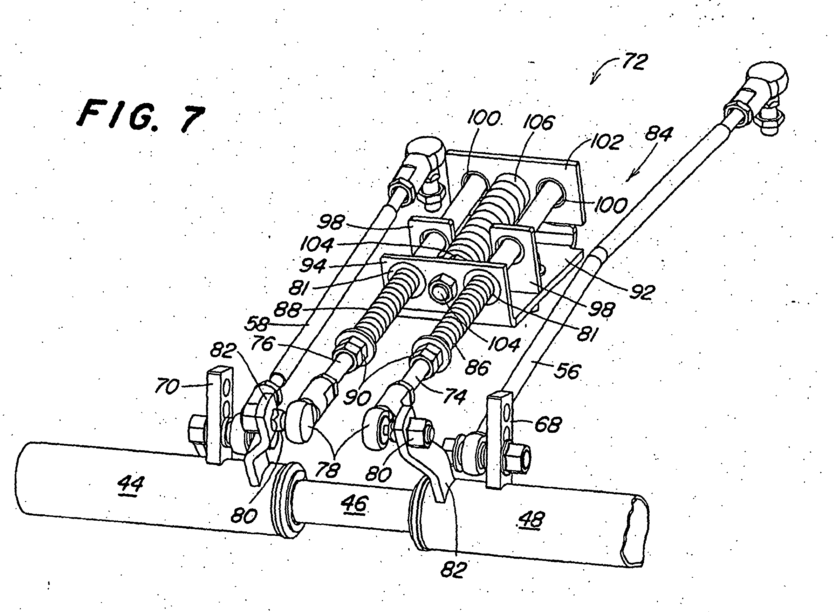

Es werden nun die Figuren 6 und 7 betrachtet, in denen ein Einstellmechanismus 72 gezeigt wird, der zwischen jedem der Lenkgestänge 56, 58 angeordnet ist, um einer Bedienungsperson die Möglichkeit zu geben, die Widerstandsmenge einzustellen, das heißt sie zu erhöhen oder zu verringen, welche mit einer Betätigung der Lenkhebel 32, 34 in und aus ihrer Neutral- oder Ruhestellung verknüpft ist. Der Einstellmechanismus 72 weist zwei Einstellstangen, Stellschrauben bzw. Stellmittel 74, 76 auf, welche sich von den Hülsen 44, 48 nach rückwärts erstrecken, wobei ein Stellmittel 76 verwendet wird, um entsprechend Widerstand an den Lenkhebel 32, und das andere Stellmittel 74 entsprechend benutzt wird, um Widerstand auf den rechten Lenkhebel 34 aufzubringen, wenn der linke oder rechte Lenkhebel 32 oder 34 oder beide betätigt wird/werden. Jedes der Stellmittel 74, 76 ist mit der Lenkachse 46 verknüpft, indem ein Betätigungsmittel 78 eingesetzt wird, welches an deren Endbereich angeordnet ist und welches mit einer Aussparung 80 in einer hochstehenden Halterung 82 verbunden ist. Die übrigen Stellmittel 74, 76 werden dann in entsprechend große Aussparungen 81 eingesetzt, welche in einer Befestigungsplatte 84 vorgesehen sind, die zwischen den beiden Pumpen 60, 62 angeordnet und an diesen angebracht ist, wie dies in Figur 6 gezeigt wird. Die Stellmittel 74, 76 sind darüber hinaus jeweils mit einer Feder 86, 88 versehen, welche derart dimensioniert ist, dass sie auf einem Bereich davon gehalten wird, der sich von der Lenkachse 46 aber bis vor die Befestigungsplatte 84 erstreckt. Jede Feder 86, 88 wird in Anlage mit der Befestigungsplatte mit einem Endbereich und gegen eine Mutter bzw. ein Mittel 90 gehalten, welches auf seinem gegenüberliegenden Endbereich verschraubt gesichert ist.

Die Befestigungsplatte 84, wie sie in Figur 7 gezeigt wird, weist eine Bodenfläche 92 sowie eine Frontwand 94 und eine Rückwand 96 auf. Die Frontwand 94 weist Aussparungen 81 zum Einsetzen der Stellmittel 74, 76 auf. Die Stellmittel 74, 76 sind darüber hinaus in Stabilisatoren 98 und in Aussparungen 100 in einer Gleitplatte 102, wie gezeigt, eingesetzt, wobei die Stabilisatoren 98 verwendet werden zu helfen die Stellmittel 74, 76 in einer aufrechten Stellung zu halten, da sie nicht an der Befestigungsplatte 84 befestigt oder gesichert sind. Die Gleitplatte 102 wird verwendet, um einen Widerstand auf die Lenkhebel 32, 34 bei deren Bewegung aus ihrer Neutralstellung, wie dies im Folgenden besprochen wird, auszuüben.

Wiederum mit Bezug auf die Figuren 4 und 5 weist die Befestigungsplatte 84 ein zentrales Stellmittel 104 und eine zugeordnete Feder 106 auf, welche um ihren Umfang gewickelt ist. Abweichend von den Stellmitteln 74, 76 ist das zentrale Stellmittel 104 durch die Verwendung von Verschraubungen an der Frontwand 94 und der Rückwand 96 der Befestigungsplatte 84 befestigt, wie dies in den Figuren 4 und 5 gesehen werden kann.

Die Anordnung des Einstellmechanismus 82 und die Verbindung jedes der Lenkgestänge 56, 58 mit der rechten und linken hydrostatischen Pumpe 60, 62 wird in Figur 6 dargestellt. Wie gezeigt, erstrecken sich die Lenkgestänge 56, 58 nach rückwärts von ihren entsprechenden Hülsen 44, 48, um mit Pumpenarmen 108, 110 verbunden zu werden, welche an der linken und rechten Pumpe 60, 62 angebracht sind und sich von diesen nach seitlich erstrecken. Eine Bewegung entweder des rechten oder des linken Lenkhebels 32 oder 34 bewirkt, dass ein entsprechender Bereich der Hülse 44, 48 sich um die Lenkwelle 46 dreht, um dabei die das zugeordnete Lenkgestänge in Längsrichtung mit Bezug dazu zu verschieben, um so die Pumpenarme 108 oder 110 entsprechend zu verschwenken.

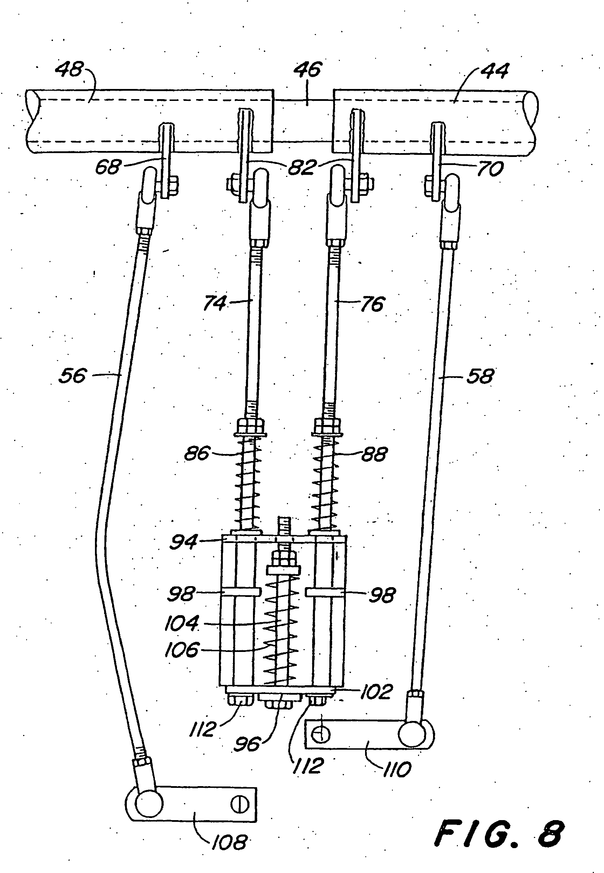

Bezugnehmend auf die Figuren 8 - 11 kann die Funktion des Einstellmechanismus 72 gesehen werden, wenn das Fahrzeug 20 aus seiner Neutralstellung sowohl in Vorwärtsfahrtstellung, in Rückwärtsfahrstellung als auch durch eine Linksdrehung gebracht wird. Jede dieser Stellungen ist mit Bezug auf die entsprechende Bewegung der Pumpenarme 108, 110 gezeigt. Beginnend mit Figur 8 wird die Wirkungsweise jedes der Stellmittel 74, 76 gezeigt, wenn das Fahrzeug 20 und genauer der linke und der rechte Lenkhebel 32, 34 beide in einer Neutralstellung angeordnet sind. In dieser Stellung wird jeder der Lenkhebel 32, 34 in einer aufrechten Stellung gehalten, wie dies durch die horizontale Stellung der Arme 108, 110 angedeutet wird, wie dies in Figur 8 gezeigt wird. Da auch jede der Federn 86, 88 nicht zusammengepresst ist, wird im Wesentlichen keine Kraft daran angelegt. Entsprechend belastet jede der Federn 86, 88 durch ihren eigenen ausgestreckten Zustand ihrer jeweiligen Lenkhebel in Richtung seiner Neutralstellung. In dieser Stellung arbeiten die linke und die rechte Feder 86, 88, um die Lenkhebel 32, 34 weg von einer Platzierung in einer Rückwärtsstellung zu belasten, während das Stellmittel 106 wirkt, um die Lenkhebel 32, 34 weg von einer Platzierung in einer Vorwärtsstellung zu drängen, um hierdurch die Neutralstellung zu erreichen.

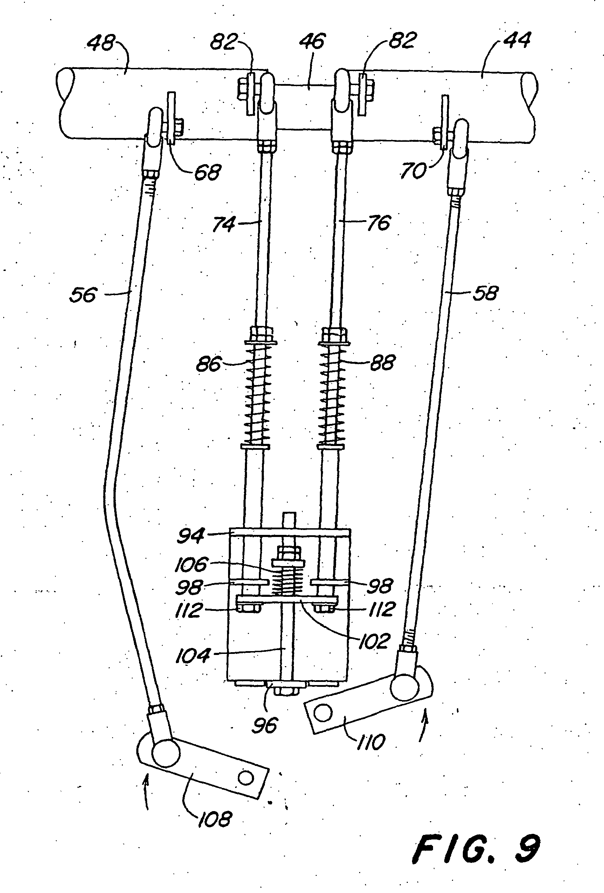

Wie es in Figur 9 gezeigt wird, ist jeder der Lenkhebel 32, 34 in der Vorwärtsstellung angeordnet, wie dies durch Pfeile angezeigt wird, um das Fahrzeug 20 entsprechend zu lenken. Bei einer Platzierung in der Vorwärtsstellung drehen die Hülsen entsprechend. Bei dieser Drehung wird jedes der Stellmittel 74, 76 in die gleiche Richtung gezogen, wodurch die Gleitplatte 102 gegen die Feder 106 gezogen wird, da ein Kopfbereich 112, der an den Endbereichen des Stellmittels 74, 76 angebracht ist, an der Gleitplatte 102 anliegt und in Kontakt damit verbleibt, bis jeder der Lenkhebel 32, 34 aus seiner Vorwärtsstellung freigegeben wird. Somit wird, wenn das Fahrzeug 20 beginnt, sich vorwärts zu bewegen, jeder der Lenkhebel 32, 34 die gleiche Menge an Widerstandskraft erfahren, welche sie zurück in ihre Neutralstellung drängt, da nur die Feder 94 arbeiten wird, um beide Lenkhebel 32, 34 zurück in die Neutralstellung zu drängen. Ein Aufbringen der gleichen Kraftmenge auf jeden der Lenkhebel 32, 34 erlaubt es der Bedienungsperson darüber hinaus zu wissen, wie viel Anstrengung benötigt wird, um entweder einen oder beide Lenkhebel 32, 34 zu bewegen, um zu bewirken, dass sich das Fahrzeug 20 vorwärts bewegt.

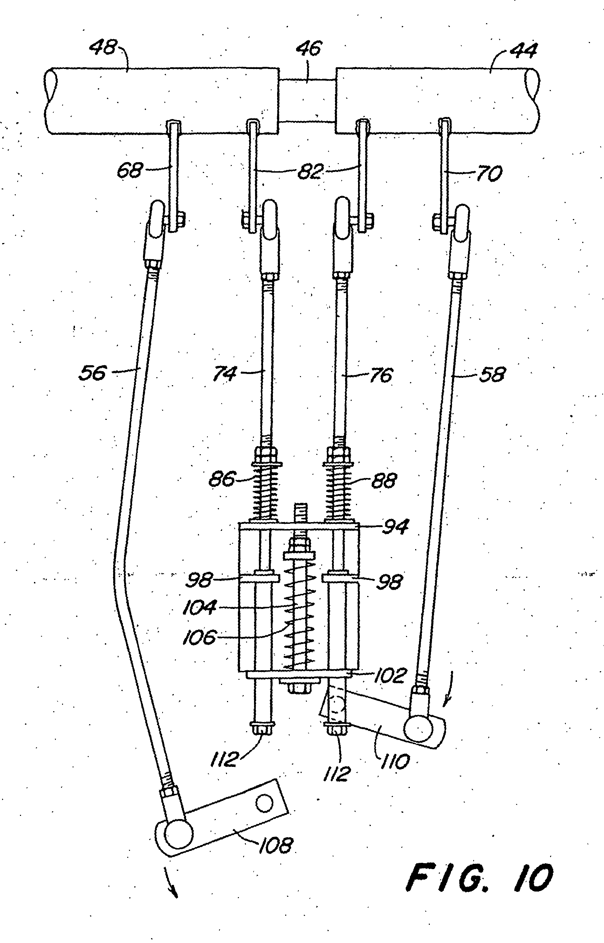

Figur 10 zeigt das Gegenteil von dem in Figur 9 gezeigten, das heißt eine Bewegung der Lenkhebel 32, 34 nach rückwärts und somit des Fahrzeugs 20 in Rückwärtsrichtung, wie dies durch die Pfeile gezeigt wird. In dieser Richtung bleibt die Feder 106 dekomprimiert, da sie nur verwendet wird, um einen Widerstand an den Lenkhebeln 32, 34 zur Verfügung zu stellen, wenn das Fahrzeug 20 in Vorwärtsrichtung gefahren wird. Statt dessen werden die Federn 86, 88, die dem linken und dem rechten Stellmittel 74, 76 zugeordnet sind, zusammengepresst, wenn sie an der vorderen Wand 94 der Befestigungsplatte 94 anliegen und wirken, um die Lenkhebel 32, 34 zurück in ihre Neutralstellung zu drängen. Eine solche Anlage wird durch eine abgeschrägte Ausführung der rückwärtigen Wand 96 erlaubt, wie sie in Figur 5 gesehen werden kann, um es den Stellmitteln 74, 76 zu erlauben, sich darüber hinaus zu erstrecken.

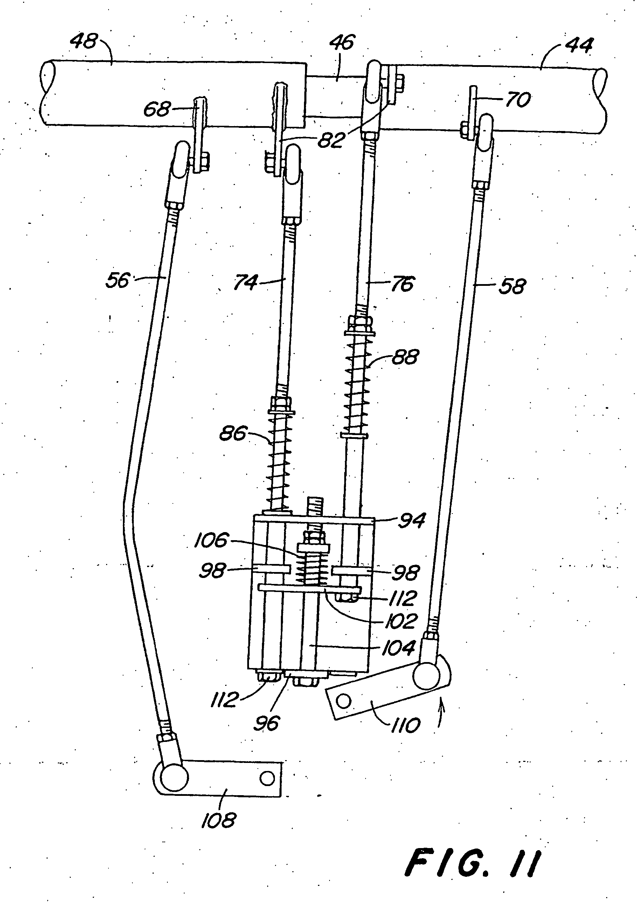

Es wird nun auf Figur 11 Bezug genommen in der eine Bewegung der Lenkgestänge 56, 58 und den Stellmitteln 74, 76 gezeigt wird, wenn das Fahrzeug eine Linksdrehung ausführt. Es soll klar sein, dass die Anordnung der Lenkgestänge, wenn das Fahrzeug 20 eine Rechtsdrehung ausführt, der Stellung der betroffenen Gestänge und Einstellbauteile entgegengesetzt ist. Während der Linksdrehung wird der rechte Lenkhebel 34 nach vorn bewegt, wenn der linke Lenkhebel 32 in seiner Neutralstellung gehalten wird. In dieser Kombination ist die Feder 106 bei Kontakt mit der Gleitplatte 102, wie oben beschrieben, zusammengedrückt. Mit Bezug auf die Federn 86, 88 bleibt die rechte Feder 88 ausgestreckt, um nicht zu dem auf den rechten Lenkhebel 34 ausgeübten Widerstand beizutragen. Vielmehr kann der gesamte auf den Lenkhebel 34 ausgeübte Widerstand direkt dem Zusammendrücken der Feder 106 zugeordnet werden, wenn sie zwischen der Gleitplatte 102 und der Innenseite der vorderen Wand 94 der Befestigungsplatte 84 zusammengedrückt ist. Die linke Feder 86 bleibt von dem Moment, wenn der linke Lenkhebel 32 von seiner vollen Vorwärtsstellung über eine Zeitdauer, die es benötigt, um ihn in seine Neutralstellung zurückzubringen. ausgestreckt, wie dies in Figur 11 dargestellt ist. Wenn er die Neutralstellung erreicht, wird der linke Lenkhebel 32 im Wesentlichen angehalten, wenn die Feder 86 an der Außenseite der Frontwand 94 zur Anlage kommen wird. Wenn er unbeabsichtigt oder ansonsten freigegeben wird, wird die Rückstellung des Lenkhebels 32 in dem Sinne gepuffert, dass die Feder 86 an der Frontwand 94 der Befestigungsplatte 84 anliegen wird, wenn er freigegeben wird, wodurch eine Bewegung des Lenkhebels 32 über seine Neutralstellung hinaus im Wesentlichen eingeschränkt wird. Ansonsten könnte das Stellmittel 74 die Neigung aufweisen, sich über die Rückwand 96 hinaus zu bewegen. Eine Verhinderung einer solchen Bewegung befähigt das Fahrzeug 20 ein Rucken oder ein sonstiges Abweichen von der beabsichtigen Richtung zu vermeiden, wenn eine Richtungsänderung verursacht wird oder auftritt, da der Lenkhebel 32 fähig sein wird, seine Neutralstellung einzunehmen.

Entsprechend wird ein Einstellmechanismus zur Verfügung gestellt, welcher es einer Bedienungsperson erlaubt, den Widerstand auf jeden Lenkhebel 32, 34 einzustellen, wenn das Fahrzeug in einer Vorwärts- oder Rückwärtsrichtung fährt, ohne den normalen Betrieb der Pumpen zu beeinträchtigen. Ein Vorliegen einer solchen Fähigkeit bei einer Bewegung in Vorwärtsrichtung erlaubt eine Einstellung, ohne die Spurtreue zu beeinträchtigen oder zu einem Kriechen beizutragen. Darüber hinaus wird ein Mechanismus zur Verfügung gestellt, der die zuvor angesprochenen Anliegen mit weniger Bauteilen löst, als zuvor verwendet wurden, um eine Verringerung der Herstellungs-, Montage- und Reparaturkosten zu ermöglichen.

Mit der Beschreibung der bevorzugten Ausführungsform wird es offensichtlich werden, dass verschiedene Modifikationen durchgeführt werden können, ohne den Bereich der Erfindung, wie er durch die folgenden Ansprüche bestimmt wird, zu verlassen.

## Patentansprüche

1. Fahrzeug (20) mit zwei Lenkhebeln (32, 34), welche über Lenkgestänge (68, 70) mit jeweils einer rechten und einer linken Pumpe (60, 62), über die jeweiligen Antriebsmittel (24) des Fahrzeugs (20) angetrieben werden können, verbunden sind, und mit einem Einstellmechanismus, durch den ein auf beide Lenkhebel (32, 34) in Richtung ihrer Neutralstellung ausgeübter Widerstand einstellbar ist, **dadurch gekennzeichnet, dass** der Einstellmechanismus (72) eine Befestigungsplatte (84) mit einer Frontwand (94), einer Rückwand (96) und einer Bodenwand (92) aufweist, wobei zwischen der Frontwand (94) und der Rückwand (96) eine Gleitplatte (102) beweglich angeordnet ist und dass der Einstellmechanismus (72) wenigstens ein linkes und ein rechtes Stellmittel (74, 76), das in Abhängigkeit von der Stellung des jeweiligen Lenkhebels (32, 34) positioniert ist, wobei es durch die Frontwand (94) verschiebbar aufgenommen wird und sich bis über die Rückwand (96) hinaus erstrecken kann, und ein zentrales Stellmittel (104) aufweist, welches vorzugsweise zwischen dem linken und dem rechten Stellmittel (74, 76) angeordnet und mit der Frontwand (94) und der Rückwand (96) verbunden ist.

2. Fahrzeug nach Anspruch 1, **dadurch gekennzeichnet, dass** jedes Stellmittel (74, 76, 102) einer Feder (86, 88, 106) zugeordnet ist, welche mit einem Mittel (90) derart zusammenwirkt, dass die Federn zwischen dem Mittel (90) und einer der Wände (94, 96) bzw. der Gleitplatte (102) zusammengedrückt werden kann.

3. Fahrzeug nach Anspruch 2, **dadurch gekennzeichnet, dass** die dem linken und dem rechten Stellmittel (74, 76) zugeordneten Federn (86, 88) derart angeordnet sind, dass sie die Lenkhebel (32, 34) in Richtung ihrer Neutralstellung belasten, wenn diese in eine erste Richtung betätigt werden.

4. Fahrzeug nach Anspruch 2 oder 3, **dadurch gekennzeichnet, dass** die dem zentralen Stellmittel (104) zugeordnete Feder (106) die Lenkhebel (32, 34) in Richtung ihrer Neutralstellung belasten, wenn diese in eine der ersten Richtung entgegengesetzte Richtung betätigt werden.

5. Fahrzeug nach einem oder mehreren der Ansprüche 2 bis 4, **dadurch gekennzeichnet, dass** die dem zentralen Stellmittel(104) zugeordnete Feder (106) zwischen der Frontwand (94) und der Gleitplatte (102) angeordnet ist und mit der Gleitplatte (102)zusammenwirkt.

6. Fahrzeug nach einem oder mehreren der Ansprüche 2 bis 5, **dadurch gekennzeichnet, dass** die dem linken und rechten Stellmittel (74, 76) zugeordneten Federn (86, 88) auf der der Gleitplatte (102) abgewandten Seite der Frontplatte (94) angeordnet sind.

7. Fahrzeug nach einem oder mehreren der vorherigen Ansprüche, **dadurch gekennzeichnet, dass** dem Stellmittel (74, 76, 102) auf Lenkwellen oder auf drehbar gelagerten Lenkhülsen (44, 48) wirken, welche mit den Lenkhebeln (32, 34) und den Lenkgestängen (56, 58) direkt oder indirekt verbunden sind.

## Revendications

1. Véhicule (20) comportant deux leviers de direction (32, 34), qui peuvent être actionnés par les moyens de transmission (24) respectifs du véhicule (20) par l'intermédiaire d'un ensemble de tiges de direction (68, 70) avec respectivement une pompe droite et une pompe gauche (60, 62), et comportant un mécanisme de commande qui permet de régler une résistance exercée sur les deux leviers de direction (32, 34) en direction de leur position neutre, **caractérisé en ce que** le mécanisme de réglage (72) comporte une plaque de fixation (84) avec une paroi frontale (94), une paroi arrière (96) et un fond (92), une plaque coulissante (102) étant agencée mobile entre la paroi frontale (94) et la paroi arrière (96), et **en ce que** le mécanisme de réglage (72) comporte au moins un moyen de réglage gauche (74) et un moyen de réglage droit (76), qui sont positionnés en fonction de la commande de chacun des leviers de direction (32, 34), lesdits moyens de réglage étant reçus de manière mobile à travers la paroi frontale (94) et pouvant s'étendre au-delà de la paroi arrière (96), et un moyen de réglage central (104), qui est agencé de préférence entre le moyen de réglage gauche (74) et le moyen de réglage droit (76) et est relié à la paroi frontale (94) et à la paroi arrière (96).

2. Véhicule selon la revendication 1, **caractérisé en ce que** chaque moyen de réglage (74, 76, 102) est associé à un ressort (86, 88, 106), qui coopère avec un moyen (90) de telle sorte que les ressorts peuvent être comprimés entre le moyen (90) et une des parois (94, 96) ou la plaque coulissante (102).

3. Véhicule selon la revendication 2, **caractérisé en ce que** les ressorts (86, 88), associés aux moyens de réglage gauche et droit (74, 76), sont agencés de telle sorte qu'ils sollicitent les leviers de direction (32, 34) vers leur position neutre lorsque ceux-ci sont manoeuvrés dans une première direction.

4. Véhicule selon la revendication 2 ou 3, **caractérisé en ce que** le ressort (106), associé au moyen de réglage central (104), sollicite les leviers de direction (32, 34) vers leur position neutre, lorsque ceux-ci sont manoeuvrés dans une direction opposée à la première direction.

5. Véhicule selon une ou plusieurs des revendications 2 à 4, **caractérisé en ce que** le ressort (106), associé au moyen de réglage central (104), est agencé entre la paroi frontale (94) et la plaque coulissante (102) et coopère avec la plaque coulissante (102).

6. Véhicule selon une ou plusieurs des revendications 2 à 5, **caractérisé en ce que** les ressorts (86, 88), associés aux moyens de réglage gauche et droit (74, 76), sont agencés sur le côté de la paroi frontale (94), opposé à la plaque coulissante (102).

7. Véhicule selon une ou plusieurs des revendications précédentes, **caractérisé en ce que** les moyens de réglage (74, 76, 102) agissent sur des arbres de direction ou sur des manchons de direction (44, 48) montés rotatifs, lesquels sont reliés directement ou indirectement avec les leviers de direction (32, 34) et les ensembles de tiges de direction (56, 58).

## Claims

1. A vehicle (20) with two steering levers (32, 34) which are connected through steering linkages (68, 70) to respective right and left pumps (60, 62), through which respective drive means (24) of the vehicle (20) can be driven, and with an adjusting mechanism through which a resistance acting on the two steering levers (32, 34) in the direction of their neutral position can be adjusted, **characterized in that** the adjusting mechanism (72) comprises a mounting plate (84) with a front wall (94), a rear wall (96) and a bottom wall (92), wherein a slide plate (102) is arranged movably between the front wall (94) and the rear wall (96) and **in that** the adjusting mechanism (72) comprises at least left and right adjusting means (74, 76) which are positioned in dependence on the positions of the respective steering levers (32, 34), wherein each is slidably received through the front wall (94) and can extend out beyond the rear wall (96), and a central adjusting means (104) which is preferably arranged between the left and right adjusting means (74, 76) and is connected to the front wall (94) and the rear wall (96).

2. A vehicle according to claim 1, **characterized in that** a spring (86, 88, 106) is associated with each adjusting means (74, 76, 102) and so cooperates with a means (90) that the springs can be compressed between the means (90) and one of the walls (94, 96) or the slide plate (102).

3. A vehicle according to claim 2, **characterized in that** the springs (86, 88) associated with the left and right adjusting means (74, 76) are so arranged that they bias the steering levers (32, 34) in the direction of their neutral position when these are actuated in a first direction.

4. A vehicle according to claim 2 or 3, **characterized in that** the spring (106) associated with the central adjusting means (104) biases the steering levers (32, 34) in the direction of their neutral position when these are actuated in a direction opposite the first direction.

5. A vehicle according to one or more of claims 2 to 4, **characterized in that** the spring (106) associated with the central adjusting means (104) is arranged between the front wall (94) and the slide plate (102) and cooperates with the slide plate (102).

6. A vehicle according to one or more of claims 2 to 5, **characterized in that** the springs (86, 88) associated with the left and right adjusting means (74, 76) are arranged on the side of the front plate (94) facing away from the slide plate (102).

7. A vehicle according to one or more of the preceding claims, **characterized in that** the adjusting means (74, 76, 102) act on steering shafts or rotatably mounted steering sleeves (44, 48) which and are coupled directly or indirectly to the steering levers (32, 34) and the steering linkages (56, 58).
